# NEUE EUROPÄISCHE PATENTSCHRIFT

(11) **EP 0 878 121 B2**
(45) Veröffentlichungstag und Bekanntmachung des Hinweises auf die Entscheidung über den Einspruch: **05.04.2006**
(45) Hinweis auf die Patenterteilung: 04.06.2003
(21) Anmeldenummer: 98104759.0
(22) Anmeldetag: 17.03.1998
(51) Int. Cl.: A01D 41/12, A01B 69/00

(54) **Automatisch lenkbare Erntemaschine**
Harvesting machine with automatic steering
Machine de récolte à direction automatique

(30) Priorität: 13.05.1997 DE 19719939
(43) Veröffentlichungstag der Anmeldung: 18.11.1998
(73) Patentinhaber: CLAAS KGaA, 33428 Harsewinkel (DE)
(72) Erfinder: Diekhans, Norbert, Dr., 33335 Gütersloh (DE)

(56) Entgegenhaltungen:
- EP-A- 0 732 045
- EP-A- 0 732 046
- EP-A- 0 801 885
- DD-A- 99 079
- DE-A- 2 455 836
- DE-A- 2 608 049
- DE-A- 19 508 944
- FR-A- 1 497 945
- FR-A- 2 152 913
- FR-A- 2 184 856
- JP-A- 62 122 507
- JP-A- 63 245 604
- JP-A- 63 269 913
- US-A- 4 482 960

## Beschreibung

Die Erfindung betrifft eine automatisch lenkbare Erntemaschine bestehend aus einem selbstfahrenden Fahrzeug und einem von diesem getragenem Schneid/-Mahwerk, die eine Ortungsvorrichtung zum Abtasten einer Erntegutkante zur Lenkorientierung aufweist.

Eine derartige Erntemaschine ist aus der DE 24 55 836 bekannt. Bei dieser Erntemaschine wird die Erntegutkante in einem bestimmten Abstand vor dem Schneid/-Mähwerk mittels Reflexortung über Lichtstrahlen bzw. Ultraschallwellen berührungslos abgetastet.

Allerdings hat es sich gezeigt, daß die automatische Lenkung der oben genannten Erntemaschine im Ernteeinsatz zur Ausbildung von unregelmäßigen (gekrümmten, welligen) Fahrspuren/Folgeerntegutkanten führt. Darüber hinaus wird bei einem Ernteeinsatz an einem Hang die Hangabdrift dieser automatisch lenkbaren Erntemaschine nicht oder nur unzureichend kompensiert.

Weitere Ortungsvorrichtungen werden in der EP 0 732 045 A1 gezeigt. Dort wird eine Reflex- Ortungsvorrichtung beschrieben, die mit zwei getrennten enggebündelten Ortungsstrahlen in zwei unterschiedlichen Abständen vor dem Mähwerk die Erntegutkante zum einen die Ährenoberfläche und zum anderen das Stoppelfeld abtasten. Durch den Höhenunterschied zwischen dem Stoppelfeld und der Ährenoberfläche des Getreidefeldes, entsteht ein Laufzeitunterschied zwischen den Reflexsignalen. Dieser Laufzeitunterschied wird, als eine korrekte Ausrichtung des Mähwerkes zur Getreidekante erkannt. Wird jedoch ein nur geringer Laufzeitunterschied, zwischen den Ortungssignalen ermittelt, fährt die Erntemaschine entweder von der Erntgutkante weg oder auf sie zu. Anhand von zwei späten etwa gleichen Laufzeiten der Reflex- Ortungssignale, wird eine Fahrtrichtung der Erntemaschine von der Erntgutkante weg erkannt und von der Regelvorrichtung automatische ein Lenksignal entgegen dieser Fahrrichtung zur Erntegutkante hin erzeugt. Zwei zeitlich gleichzeitig frühe Laufzeiten der Reflexortungssignale, zeigen eine Fahrtrichtung der Erntemaschine von der Erntegutkante weg an. Von der Regelvorrichtung wird dann automatisch ein Lenksignal erzeugt, welches eine Fahrtrichtung der Erntemaschine zur Erntegutkante hin bewirkt.
Diese Ortungsvorrichtung hat den Nachteil, dass eine relative Veränderung/ relative Bewegung der Erntegutkante zu den beiden Abtastpunkten der Ortungsstrahlen von der Ortungsvorrichtung nicht erkannt wird. Dies wirkt sich nachteilig auf die Stabilität des gesamten Regelkreises aus Eine Reaktion des Reglers auf eine Veränderung/Bewegung kann nur verspätet ausgelöst werden, nämlich dann wenn beide Ortungsstrahlen auf den gleichen Feldbereich (Stoppelfeld/Getreidefeld) auftreffen.

In der FR 1.497.945 wird eine weitere Ortungsvorrichtung offenbart, die mit zwei Sensoren, die Erntegutkante in zwei unterschiedlichen Abständen vor einem Mähwerk, mittels zweier mechanischer Taster seitlich abtastet. Die Differenz der beiden gemittelten Sensorsignale, werden einem Lenkregler zur Regelung der Fahrtrichtung der Erntemaschine zugeführt. Diese Ortungsvorrichtung erfordert eine in Fahrtrichtung nach vorne seitlich am Schneidwerk angeordnete ausladende Sensorhalterung, die nachteilig die Bewegungsfreiheit der Erntemaschine stark einschränkt und in der Länge der Ausladung mechanisch begrenzt ist. Eine Abtastung der Erntegutkante in einer größeren Entfernung vor dem Schneidwerk, ist durch diese Vorrichtung nicht gegeben. Dies wirkt sich negativ auf die Stabilität des Lenkregelkreises aus.

Es ist daher die Aufgabe der Erfindung, die vorgenannte Erntemaschine zu verbessern, und somit eine automatische lenkbare Erntemaschine zu schaffen, die stabil und zuverlässig arbeitet.

Diese Aufgabe wird erfindungsgemäß durch die kennzeichnenden Merkmale des Patentanspruches 1 gelöst. Die automatisch gelenkte Erntemaschine (selbstfahrendes Fahrzeug mit daran befestigtem Schneid/-Mähwerk) weist mindestens eine an sich bekannte Ortungsvorrichtung zur Abtastung der Erntegutkante auf. Zur automatischen Lenkung werden die Ortungssignale in bekannter Weise einem Regler (z.B. einer elektronische Schaltung, oder einem Mikrocontroller) zugeführt, wo diese verarbeitet werden. Der Regler, der neben den Ortungssignalen in bekannter Weise die Radeinschlagwinkel-Istwerte der lenkbaren Räder der Erntemaschine empfängt, wirkt über dem Fachmann geläufige Mittel zur Verstellung der lenkbaren Räder. Derartige Mittel sind beispielsweise ein hydraulischer Lenkzylinder, der über ein elektrisch betätigbares hydraulisches Steuerventil geregelt mit Hydraulikflüssigkeit beaufschlagt wird. Die Erfindung ist nicht auf Erntemaschinen mit lenkbaren Rädern beschränkt, sondern ebenso bei Erntemaschinen mit einem Raupenfahrweg anwendbar.

Dadurch daß bei der erfindungsgemäßen Erntemaschine der Regler für die automatische Lenkung zwei oder mehrere zu verschiedenen Abtastabständen vor dem Schneid/-Mähwerk referierende Ortungssignale verarbeitet, ist eine automatisch lenkbare Erntemaschine mit einer stabil arbeitenden Regelung geschaffen worden, die zuverlässig einsetzbar ist.

Aus zwei oder mehreren zu verschiedenen Abtastabständen vor dem Schneid/-Mähwerk referierenden Ortungssignalen läßt sich der Richtungswinkel zwischen der Erntegutkante, die in der Regel zumindest annähernd geradlinig verläuft, und der Erntemaschinen-Längsachse recht genau ermitteln und zur automatischen Lenkungsregelung verwenden. Bei dieser Lenkstrategie wird die Erntemaschinen-Längsachse parallel zur Erntegutkante geführt, d.h. die Regelung versucht den oben genannte Richtungswinkel jeweils auf Null zu minimieren.

Darüber hinaus kann bei der Verwendung von zwei oder mehreren zu unterschiedlichen Abtastabständen vor dem Schneid/-Mähwerk referierenden Ortungssignalen der Abstand zwischen der linken bzw. rechten Schneid/-Mähwerks-Begrenzungskante und der Erntegutkante ermittelt werden. Dadurch läßt sich in vorteilhafter Weise die Hangabdrift der Erntemaschine beim Ernteeinsatz an einem Hang kompensieren, wenn der Abstand zwischen der Schneid/-Mähwerks-Begrenzungskante und der Erntegutkante sich ändert, d.h. von einem vorgegebenem Sollwert (Sicherheitsabstand) abweicht, obwohl die Erntemaschine an sich korrekt an der Erntegutkante entlang fährt.

Außerdem wird mit der erfindungsgemäßen automatisch lenkbaren Erntemaschine bei einer entsprechenden Verarbeitung der verschiedenen Ortungssignale in dem Regler (z.B. ein in einem Mikrocontroller implementierter Algorithmus) eine Glättung der Fahrspur entlang der Erntegutkante bewirkt.

In einer vorteilhaften Ausgestaltung der Erfindung weist die Erntemaschine zwei Ortungsvorrichtungen zur Abtastung der Erntegutkante in zwei verschiedenen Abständen auf, wobei die eine die Erntegutkante im Fernbereich beispielsweise 8-10 m vor dem Schneid/-Mähwerk und die andere die Erntegutkante im Nahbereich. Im Einzugsbereich des Schneid/-Mähwerks abtastet.

In einer zweiten vorteilhaften Ausgestaltung der Erfindung weist die Erntemaschine eine Ortungsvorrichtung auf, die um eine horizontale Achse schwenkbar ist, wobei die Ortungsvorrichtung je nach Schwenkwinkel die Erntegutkante in einem anderen Abstand vor dem Schneid/-Mähwerk abtastet. Hier kann auf eine zweite Ortungsvorrichtung verzichtet werden.

Darüber hinaus ist auch Kombination aus einer schwenkbaren Ortungsvorrichtung und einer zweiten Ortungsvorrichtung für die Abtastung der Erntegutkante im Einzugsbereich des Schneid/-Mähwerks vorgesehen.

Die zweite Ortungsvorrichtung ist zur Ermittlung des Abstandes zwischen der Schneid-Mähwerks-Begrenzungskante und der Erntegutkante ausgelegt. Dies kann zur Bestimmung und Regelung der Schneid/-Mähwerksauslastung benutzt werden. Dies kann in Verbindung mit einer Online-Ertragserfassung auch zur Erstellung einer genaueren Flächenermittlung und daraus hervorgehenden genaueren Ertragskartierung verwendet werden.

In einer Lenkstrategie, die mit der erfindungsgemäßen Erntemaschine durchgeführt werden kann, dienen die Ortungssignale der zweiten Ortungsvorrichtung (OV2) als Korrektursignalfür einen Autopiloten, der primär nach den Signalen der ersten Ortungsvorrichtung (OV1) für die Fernabtastung lenkt.

Eine Gewichtung, d.h. der Einfluß auf die automatische Lenkung, der Ortungssignale (Fern, Nah; OS1,OS2) kann in Abhängigkeit von der Fahrgeschwindigkeit vorgenommen werden.

Bei einer besonders einfachen Verknüpfung der Ortungssignale (Fern, Nah; OS1,OS2) wirkt das Nahsignal (OS2) auf das Femsignal nur ein, wenn eine festgelegter Schneid/- Mähwerksauslastung unter- oder überschritten wird Dadurch wird das Schneid/- Mähwerk immer ausreichend ausgelastet bzw. wird verhindert, daß Mähgut stehen bleibt.

Für die Ortungsvorrichtung (Fern) kann der Fachmann statt einer Reflex-Ortungsvorrichtung auch eine digitale Kamera einsetzten, die oberhalb des Erntegutes angeordnet und nach vom geneigt zum Boden ausgerichtet ist. Der vor dem Schneid/-Mähwerk liegende Aufnahmebereich der Kamera wird zum Abtasten der Erntegutkante mittels digitaler Bildverarbeitung ausgewertet. Dabei kann die Erntegutkante an nur einem Punkt im Aufnahmebereich der Kamera ermittelt und die Lage dieses Punktes in Bezug auf die Erntemaschine/Schneid/-Mähwerk als Ortungssignal zur automatischen Lenkung verwendet werden. Alternativ dazu kann die Erntegutkante an zwei oder mehreren Punkten im Aufnahmebereich der Kamera an mehreren Punkten ermittelt werden und die Lage dieser Punkte zur automatischen Lenkung herangezogen werden.
Außerdem ist es vorgesehen, die mit mindestens einer der beiden Ortungsvorrichtungen während der Fahrt abgetasteten Positionen der Erntegutkante zusätzlich fortlaufend in einem Ringspeicherzur Ermittlung eines Erntegutkantenverlaufes abzuspeichern und diesen Erntegutkantenverlauf von dem Regler zur automatischen Lenkung mitzuverarbeiten Der abgetastete Erntegutkantenverlauf kann hierzu jeweils durch gleitende Mittelwertbildung über ein bestimmtes Zeitfenster gemittelt werden.

Anhand der beigefügten Zeichnungen soll die Erfindung nachfolgend anschaulich erläutert werden. Es zeigt:

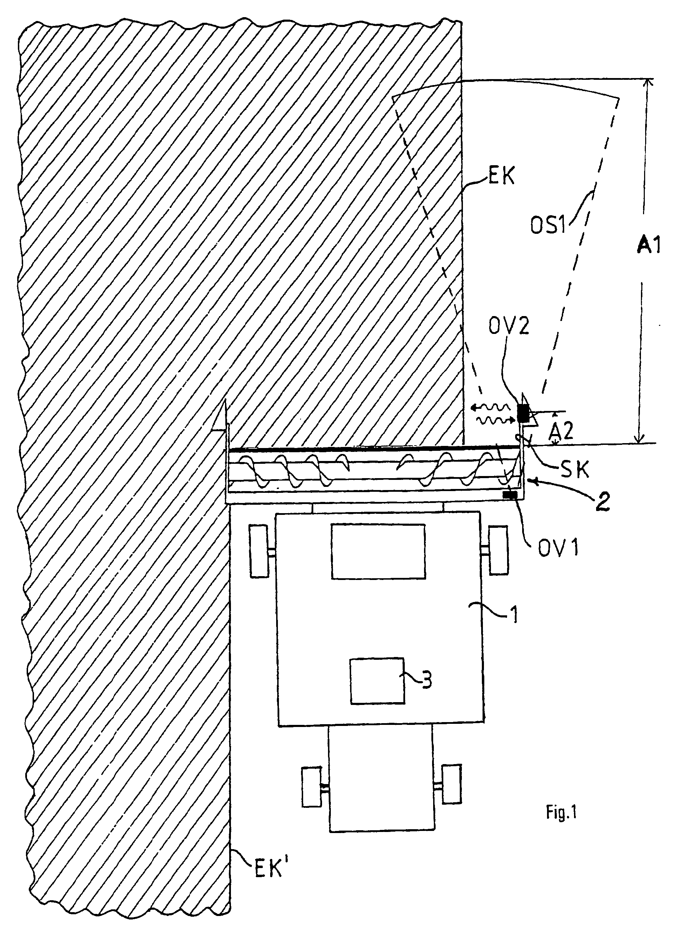

- Fig. 1: eine Draufsicht auf die automatisch lenkbare Erntemaschine im Ernteeinsatz,
- Fig.2: eine Seitenansicht der Erntemaschine,
- Fig.3: eine schematische Darstellung des Reglers und der Lenkmittel.

In Fig. ist die automatisch lenkbare Erntemaschine bei einem Ernteeinsatz beispielsweise auf einem Getreidefeld gezeigt. Die Erntemaschine - in diesem Fall ein selbstfahrender Mähdrescher (1) mit Schneidwerk (2) - weist zwei Ortungsvorrichtungen (OV1, OV2) zur Abtastung der Erntegutkante (EK) in zwei unterschiedlichen Abständen (A1, A2) vor dem Schneidwerk (2) auf. Der Abtastpunkt der Erntegutkante (EK) durch die erste Ortungsvorrichtung liegt im "Fernbereich" 3 bis 15 m, vorzugsweise 8 bis 10 m, vor dem Schneidwerk (2). Dabei kann der Fachmann für diese Ortungsvorrichtung (OV1) beispielsweise auf eine Reflex-Ortungsvorrichtung zurückgreifen, die oberhalb des Erntegutes (EG) angeordnet ist und deren Ortungsstrahlen (OS1) nach vorn leicht geneigt zum Boden verlaufen. Dabei tasten die Ortungsstrahlen (OS1) die Erntegutkante (EK) zu beiden Seiten ab. In dem dargestellten Ausführungsform ist diese Reflex-Ortungsvorrichtung (OV1) von einem Laserscanner mit Laserstrahlsende/-Empfangseinrichtungen gebildet, dessen Laser-Ortungstrahlen (OS1) periodisch in einem bestimmten Winkelbereich verschwenkt werden. Anstatt eines Laserscanners kann der Fachmann auch auf einen Ultraschallsensor mit Ultraschallsender/-Empfangseinrichtungen zurückgreifen.
Auf die weitere Ausgestaltung dieser an sich bekannten Reflex-Ortungsvorrichtungen sowie auf die Auswertung der reflektierten Ortungsstrahlen, um die Grenze zwischen dem gemähten und dem ungemähten Erntegut zu erkennen, soll hier nicht näher eingegangen werden. Hier kann der Fachmann sich auf im Stand der Technik bekannte Verfahren und Vorrichtungen stützten.

Die Ortungsvorrichtung (OV1) ist vorzugsweise auf dem Schneidwerk (2) montiert und zwar direkt an der linken bzw. rechten Schneid/-Mähwerks-Begrenzungskante (SK). Damit verläuft der Mittelpunktstrahl der Ortungsvorrichtung (OV1) fluchtend zur Schneid/-Mähwerks-Begrenzungskante (SK). In einer nicht dargestellten Ausführungsform ist diese Ortungsvorrichtung (OV1) auf dem selbstfahrenden Fahrzeug, beispielsweise auf der Fahrerkabine, montiert. In jedem Fall wird die Position der Ortungsvorrichtung (OV1) über geometrische Beziehungen bei der Auswertung der Ortungssignale (OS1) und der Verarbeitung im Regler für die automatische Lenkung berücksichtigt, wobei die Anordnung der Ortungsvorrichtung (OV1) direkt an der Schneid/-Mähwerks-Begrenzungskante (SK) besonders günstige und einfach zu bestimmende geometrische Beziehungen erbringt.

Die zweite Ortungsvorrichtung (OV2) für den "Nahbereich" ist - in dem hier gezeigten Beispiel- an der rechten Schneid/-Mähwerks-Begrenzungskante (SK) angeordnet. Sie tastet mit einem Ultraschallsensor den Abstand zwischen der Schneid/-Mähwerks-Begrenzungskante (SK) und der Erntegutkante (EK) ab. Statt des Ultraschallsensor kann der Fachmann auch einen mechanisch von der Erntegutkante auslenkbaren Tastbügel (nicht dargestellt) verwenden, dessen Auslenkung gemessen wird.

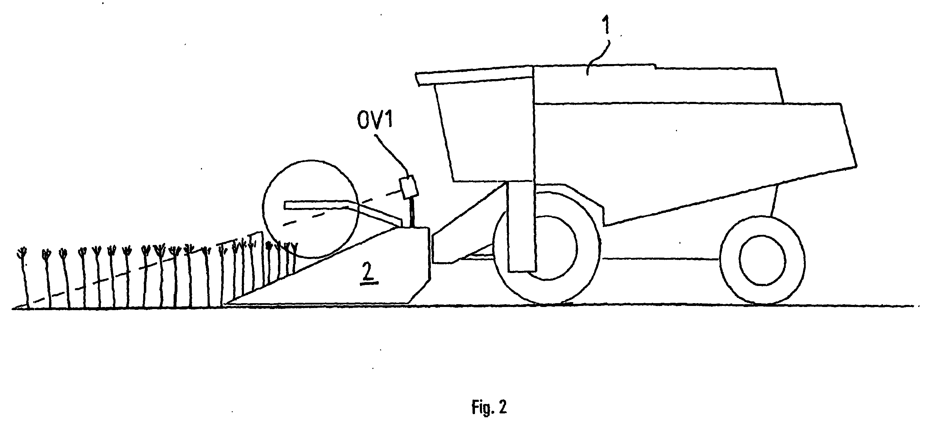

In Fig.2 ist eine Seitenansicht der Erntemaschine dargestellt, an der sichtbar ist, wo die erste Ortungsvorrichtung (OV1) an dem Schneidwerk (2) angeordnet ist und wie die Ortungsstrahlen (OS1) verlaufen.

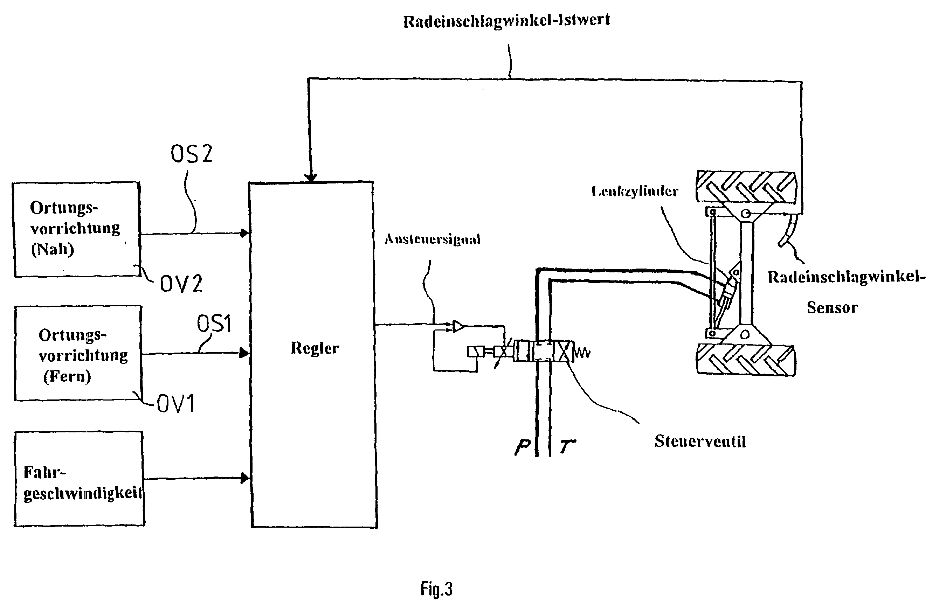

In Fig. 3 sind die Mittel zur automatischen Lenkung bei einem Mähdrescher mit lenkbaren Hinterrädern gezeigt. Der Regler (3) empfängt die Ortungssignale (OS1,OS2) der beiden Ortungsvorrichtungen (OV1,OV2), den Radeinschlagwinkel-Istwert und ein Signal für die Fahrzeuggeschwindigkeit. Anhand eines implementierten Regelalgorithmusses ermittelt der Regler (3) hieraus ein Ansteuersignal für ein elektrisch betätigbares, hydraulisches Steuerventil, das den Lenkzylinder zur Verstellung der lenkbaren Räder mit Hydraulikflüssigkeit beaufschlagt.

## Patentansprüche

1. Automatisch lenkbare Erntemaschine bestehend aus einem selbstfahrenden Fahrzeug (1) und einem von diesem getragenen Schneid-/Mähwerk (2), die eine an sich bekannte Ortungsvorrichtung (OV1) zum Abtasten der Erntegutkante (EK), insbesondere die Grenze zwischen gemähtem und ungemähtem Erntegut, aufweist, wobei die Erntegutkante (EK) in mindestens zwei unterschiedlichen Abständen (A1, A2) vor dem Schneid-/Mähwerk (2) abgetastet wird, die von der Ortungsvorrichtung (OV1) erzeugten Ortungssignale (OS1) von einem Regler (3) verarbeitet werden und über bekannte Mittel der automatischen Lenkung dienen,
**dadurch gekennzeichnet,**
**dass** die Erntegutkante (EK) in einem Fern-Abstand (A1) von der Ortungsvorrichtung (OV1) zu beiden Seiten berührungslos und in einem weiteren Nah-Abstand (A2) zwischen einer Schneid-/Mähwerks-Begrenzungskante (SK) und der Erntegutkante (EK) im Einzugsbereich des Schneid-/Mähwerks (2) von einer an des Schneid/Mähwerks-Begrenzungskante (SK) angeordneten zweiten Ortungsvorrichtung (OV2) abgetastet und von dem Regler (3) mindestens zwei zu unterschiedlichen Abtastabständen (A1, A2) vor dem Schneid-/Mähwerk (2) referierende Ortungssignale (OS1, OS2) nach einer Lenkstrategie verarbeitet werden und über bekannte Mittel zur automatischen Lenkung dienen.

2. Automatisch lenkbare Erntemaschine nach Anspruch 1,
**dadurch gekennzeichnet,**
**daß** aus mindestens zwei zu unterschiedlichen Abtastabständen (A1,A2) vor dem Schneid/-Mähwerk (2) referierenden Ortungssignalen (OS1,OS2) der Richtungswinkel zwischen der Erntemaschinen-Längsachse und der Erntegutkante (EK) und/ oder der Abstand zwischen der linken bzw. rechten Schneid/-Mähwerks-Begrenzungskante (SK) und der Erntegutkante (EK) ermittelt und der so ermittelte Richtungswinkel und/ oder Abstand der automatischen Lenkung dienen.

3. Automatisch lenkbare Erntemaschine nach einem der Ansprüche 1 oder 2,
**dadurch gekennzeichnet,**
**daß** die erste Ortungsvorrichtung (OV1) von einer mit Ortungsstrahlen (OS1) berührungslos arbeitenden Reflex-Ortungsvorrichtung gebildet ist, die oberhalb des Erntegutes angeordnet ist und deren Ortungsstrahlen (OS1) nach vorn geneigt zum Boden verlaufen, wobei die Ortungsstrahlen (OS1) zu beiden Seiten der abzutastenden Erntekante (EK) verlaufen und die Ortungsstrahlen (OS1) die Erntegutkante in einem Abstand (A1) zwischen 3 m und 15 m vor dem Schneid/-Mähwerk (2), vorzugsweise zwischen 8 m und 10 m, abtasten.

4. Automatisch lenkbare Erntemaschine nach Anspruch 3,
**dadurch gekennzeichnet,**
**daß** die erste Ortungsvorrichtung (OV1) ein Laserscanner mit Laserstrahlsende/-Empfangseinrichtungen ist, dessen Laser-Ortungstrahlen (OS1) periodisch in einem bestimmten Winkelbereich verschwenkt werden.

5. Automatisch lenkbare Erntemaschine nach Anspruch 3,
**dadurch gekennzeichnet,**
**daß** die erste Ortungsvorrichtung (OV1) ein Ultraschallsensor mit Ultraschallsender/-Empfangseinrichtungen ist.

6. Automatisch lenkbare Erntemaschine nach einem der Ansprüche 3 bis 5,
**dadurch gekennzeichnet,**
**daß** die erste Ortungsvorrichtung (OV1) an dem Schneid/-Mähwerk (2) montiert ist.

7. Automatisch lenkbare Erntemaschine nach Anspruch 6,
**dadurch gekennzeichnet,**
**daß** die erste Ortungseinrichtung (OV1) direkt an der linken bzw. rechten Schneid/-Mähwerks-Begrenzungskante (SK) angeordnet ist.

8. Automatisch lenkbare Erntemaschine nach einem der Ansprüche 3 bis 5,
**dadurch gekennzeichnet,**
**daß** die erste Ortungseinrichtung (OV1) an dem selbstfahrenden Fahrzeug (1) angeordnet ist.

9. Automatisch lenkbare Erntemaschine nach einem der vorstehenden Ansprüche 3 bis 8,
**dadurch gekennzeichnet,**
**daß** die zweite Ortungsvorrichtung (OV2) die Erntegutkante (EK) im Einzugsbereich des Schneid/-Mähwerks (2) abtastet.

10. Automatisch lenkbare Erntemaschine nach Anspruch 9,
**dadurch gekennzeichnet,**
**daß** die zweite Ortungsvorrichtung (OV2) an der linken bzw. rechten Schneid/-Mähwerks-Begrenzungskante (SK) des Schneid/-Mähwerks (2) angeordnet ist und den Abstand zwischen der Schneid/-Mähwerks-Begrenzungskante (SK) und der Erntegutkante (EK) abtastet.

11. Automatisch lenkbare Erntemaschine nach einem der Ansprüche 9 oder 10,
**dadurch gekennzeichnet,**
**daß** die zweite Ortungsvorrichtung (OV2) von einem Ultraschallsensor mit Ultraschallsende/-Empfangseinrichtungen ist.

12. Automatisch lenkbare Erntemaschine nach einem der Ansprüche 9 oder 10,
**dadurch gekennzeichnet,**
**daß** die zweite Ortungsvorrichtung (OV2) von einem mechanisch gegenüber der Erntegutkante (EK) auslenkbaren Tastbügel gebildet ist, dessen Auslenkung gemessen wird.

13. Automatisch lenkbare Erntemaschine nach einem der Ansprüche 10 bis 12,
**dadurch gekennzeichnet,**
**daß** die zweite Ortungsvorrichtung (OV2) zusätzlich ein Signal für die Schneid/-Mähwerks-Auslastung liefert.

14. Automatisch lenkbare Erntemaschine nach einem der vorstehenden Ansprüche,
**dadurch gekennzeichnet,**
**daß** die Erntemaschine eine um eine horizontale Achse schwenkbare Ortungsvorrichtung (OV1) aufweist, wobei die Ortungsvorrichtung (OV1) je nach Schwenkwinkel die Erntegutkante (EK) in einem anderen Abstand (A1,A2) vor dem Schneid/-Mähwerk (2) abtastet.

15. Automatisch lenkbare Erntemaschine nach Anspruch 14,
**dadurch gekennzeichnet,**
**daß** die Ortungsvorrichtung (OV1) für die Nah- und Fernabtastung der Erntegutkante (EK) auf zwei Schwenkwinkel einstellbar ist.

16. Automatisch lenkbare Erntemaschine nach Anspruch 14,
**dadurch gekennzeichnet,**
**daß** die Ortungsvorrichtung (OV1) stufenlos verschwenkbar ist, wobei die Erntegutkante (EK) in einem Abstandsbereich (A1-A2) vor dem Schneid/-Mähwerk (2) stufenlos abtastbar ist.

17. Automatisch lenkbare Erntemaschine nach einem der vorstehenden Ansprüche,
**dadurch gekennzeichnet,**
**daß** die Erntemaschine eine Ortungsvorrichtung (OV1) in Form einer digitalen Kamera aufweist, die oberhalb des Erntegutes angeordnet ist und nach vorn geneigt zum Boden ausgerichtet ist, wobei der vor dem Schneid/-Mähwerk (2) liegende Aufnahmebereich der Kamera zum Abtasten der Erntegutkante (EK) mittels digitaler Bildverarbeitung ausgewertet wird.

18. Automatisch lenkbare Erntemaschine nach Anspruch 17,
**dadurch gekennzeichnet,**
**daß** die Erntegutkante (EK) an einem Punkt im Aufnahmebereich der Kamera ermittelt und die Lage dieses Punktes als Ortungssignal verwendet wird.

19. Automatisch lenkbare Erntemaschine nach Anspruch 17,
**dadurch gekennzeichnet,**
**daß** der Emtegutkantenvenauf im Aufnahmebereich der Kamera an mehreren Punkten ermittelt und diese Punkte als Ortungssignale verwendet werden.

20. Automatisch lenkbare Erntemaschine nach einem der vorstehenden Ansprüche,
**dadurch gekennzeichnet,**
**daß** die mit mindestens einer Ortungsvorrichtung (OV1,OV2) während der Fahrt abgetasteten Positionen der Erntegutkante zusätzlich fortlaufend In einem Ringspeicher zur Erzeugung eines Emtegutkantenverlaufes abgespeichert werden und dieser Emtegutkantenverlaufvon dem Regler zur automatischen Lenkung verarbeltet wird.

21. Automatisch lenkbare Erntemaschine nach einem der vorstehenden Ansprüche,
**dadurch gekennzeichnet,**
**daß** der abgetastete Emtegutkantenverlauf jeweils durch gleitende Mittelwertbildung über ein bestimmtes Zeitfenster gemittelt wird und der gemitteite Emtegutkantenverlauf von dem Regler zur automatischen Lenkung verarbeitet wird.

## Claims

1. An automatically steerable harvester comprising a self-propelled vehicle (1) and a cutting/mowing mechanism (2) carried thereby, which has a per se known position-finding device (OV1) for scanning the crop material edge (EK), in particular the boundary between mown and unmown crop material, wherein the crop material edge (EK) is scanned at at least two different distances (A1, A2) in front of the cutting/mowing mechanism (2), and the position-finding signals (OS1) produced by the position-finding device (OV1) are processed by a regulator (3) and serve by way of known means for automatic steering, **characterised in that** the crop material edge (EK) is scanned at a far distance (A1) from the position-finding device (OV1) on both sides in contact-less manner and at a further near distance (A2) between a cutting/mowing mechanism boundary edge (SK) and the crop material edge (EK) in the draw-in region of the cutting/mowing mechanism (2) by a second position-finding device (OV2), arranged at the cutting/mowing mechanism boundary edge (SK), and at least two position-finding signals (OS1, OS2) referring to different scanning spacings (A1, A2) in front of the cutting/mowing mechanism (2) are processed by the regulator (3) in accordance with a steering strategy and serve by way of known means for automatic steering.

2. An automatically steerable harvester according to claim 1, **characterised in that** the directional angle between the longitudinal axis of the harvester and the crop material edge (EK) and/or the distance between the left or right cutting/mowing mechanism boundary edge (SK) respectively and the crop material edge (EK) are ascertained from at least two position-finding signals (OS1, OS2) referring to different scanning distances (A1, A2) in front of the cutting/mowing mechanism (2) and the so ascertained directional angle and/or distance serve for automatic steering.

3. An automatically steerable harvester according to one of claims 1 and 2, **characterised in that** the first position-finding device (OV1) is formed by a reflection position-finding device which operates in a contact-less manner with position-finding beams (OS1) and which is arranged above the crop material and whose position-finding beams (OS1) extend forwardly inclinedly relative to the ground, wherein the position-finding beams (OS1) extend on both sides of the crop edge (EK) to be scanned and the position-finding beams (OS1) scan the crop material edge at a distance (A1) of between 3m and 15m in front of the cutting/mowing mechanism (2), preferably between 8m and 10m.

4. An automatically steerable harvester according to claim 3, **characterised in that** the first position-finding device (OV1) is a laser scanner with laser beam transmitting/receiving devices, whose laser position-fmding beams (OS1) are periodically pivoted in a given angular range.

5. An automatically steerable harvester according to claim 3, **characterised in that** the first position-finding device (OV1) is an ultrasound sensor with ultrasound transmitting/receiving devices.

6. An automatically steerable harvester according to one of claims 3 to 5, **characterised in that** the first position-finding device (OV1) is mounted to the cutting/mowing mechanism (2).

7. An automatically steerable harvester according to claim 6, **characterised in that** the first position-finding device (OV1) is arranged directly at the left or right cutting/mowing mechanism boundary edge (SK).

8. An automatically steerable harvester according to one of claims 3 to 5, **characterised in that** the first position-finding device (OV1) is arranged at the self-propelled vehicle (1).

9. An automatically steerable harvester according to one of preceding claims 3 to 8, **characterised in that** the second position-finding device (OV2) scans the crop material edge (EK) in the draw-in region of the cutting/mowing mechanism (2).

10. An automatically steerable harvester according to claim 9, **characterised in that** the second position-finding device (OV2) is arranged at the left or right cutting/mowing mechanism boundary edge (SK) of the cutting/mowing mechanism (2) and scans the distance between the cutting/mowing mechanism boundary edge (SK) and the crop material edge (EK).

11. An automatically steerable harvester according to one of claims 9 and 10, **characterised in that** the second position-finding device (OV2) is formed by an ultrasound sensor with ultrasound transmitting/receiving devices.

12. An automatically steerable harvester according to one of claims 9 and 10, **characterised in that** the second position-finding device (OV2) is formed by a sensing hoop which can be mechanically deflected with respect to the crop material edge (EK) and the deflection of which is measured.

13. An automatically steerable harvester according to one of claims 10 to 12, **characterised in that** the second position-sensing device (OV2) additionally supplies a signal for the cutting/mowing mechanism loading.

14. An automatically steerable harvester according to one of the preceding claims, **characterised in that** the harvester has a position-finding device (OV1) which is pivotable about a horizontal axis, wherein depending on the respective pivot angle the position-finding device (OV1) scans the crop material edge (EK) at another distance (A1 A2) in front of the cutting/mowing mechanism (2).

15. An automatically steerable harvester according to claim 14, **characterised in that** the position-finding device (OV1) can be set to two pivot angles for near and far scanning of the crop material edge (EK).

16. An automatically steerable harvester according to claim 14, **characterised in that** the position-finding device (OV1) is steplessly pivotable, wherein the crop material edge (EK) can be steplessly scanned at a distance range (A1-A2) in front of the cutting/mowing mechanism (2).

17. An automatically steerable harvester according to one of the preceding claims, **characterised in that** the harvester has a position-finding device (OV1) in the form of a digital camera which is arranged above the crop material and which is directed forwardly inclinedly relative to the ground, wherein the recording region of the camera, which is in front of the cutting/mowing mechanism (2), for scanning the crop material edge (EK), is evaluated by means of digital image processing.

18. An automatically steerable harvester according to claim 17, **characterised in that** the crop material edge (EK) is ascertained at a point in the recording region of the camera and the position of said point is used as a position-finding signal.

19. An automatically steerable harvester according to claim 17, **characterised in that** the configuration of the crop material edge in the recording region of the camera is ascertained at a plurality of points and said points are used as position-finding signals.

20. An automatically steerable harvester according to one of the preceding claims, **characterised in that** the positions of the crop material edge, which are scanned with at least one position-finding device (OV1, OV2) during the travel movement are additionally continuously stored in a toroidal store for producing a crop material edge configuration and said crop material edge configuration is processed by the regulator for automatic steering.

21. An automatically steerable harvester according to one of the preceding claims, **characterised in that** the scanned crop material edge configuration is averaged in each case by floating averaging over a given time window and the averaged crop material edge configuration is processed by the regulator for automatic steering.

## Revendications

1. Machine de récolte à orientation automatique comprenant un véhicule (1) automoteur et un mécanisme de coupe/battage (2) porté par ledit véhicule, qui comporte un dispositif de localisation (OV1), connu en soi, pour palper le bord (EK) du produit à récolter, en particulier la limite entre produit moissonné et produit non moissonné, le bord (EK) du produit à récolter étant palpé à au moins deux distances (A1, A2) différentes en avant du mécanisme de coupe/battage (2), les signaux de localisation (OS1) produits par le dispositif de localisation (OV1) étant traités par un dispositif de réglage (3) et étant utilisés par des moyens connus pour l'orientation automatique, **caractérisée en ce que** le bord (EK) du produit à récolter est palpé à une distance éloignée (A1), des deux côtés, sans contact, par le dispositif de localisation (OV1), et à une distance proche (A2) entre une arête (SK) de mécanisme de coupe/ battage et le bord (EK) du produit à récolter, dans la zone d'entrée du mécanisme de coupe/battage (2), par un second dispositif de localisation (OV2) disposé sur l'arête (SK) du mécanisme de coupe/battage, et **en ce que** le dispositif de réglage (3) exploite conformément à une stratégie d'orientation au moins deux signaux de localisation (OS1, OS2), qui correspondent à deux distances de palpage (A1, A2) différentes en avant du mécanisme de coupe/battage (2) et servent à l'orientation automatique par le biais de moyens connus.

2. Machine de récolte à orientation automatique selon la revendication 1, **caractérisée en ce qu'**à partir d'au moins deux signaux de localisation (OS1, OS2) qui correspondent à deux distances de palpage (A1, A2) différentes en avant du mécanisme de coupe/battage (2), on détermine l'angle d'orientation entre l'axe longitudinal de la machine de récolte et le bord (EK) du produit à récolter, et/ou la distance entre l'arête gauche ou droite du mécanisme de coupe/battage (SK) et le bord (EK) du produit à récolter, et **en ce que** l'angle d'orientation ainsi déterminé et/ou la distance sont utilisés pour l'orientation automatique.

3. Machine de récolte à orientation automatique selon une des revendications 1 ou 2, **caractérisée en ce que** le premier dispositif de localisation (OV1) est formé d'un dispositif de localisation de type réflex, travaillant sans contact avec des faisceaux de localisation (OS1), qui est disposé au-dessus du produit à récolter et dont les faisceaux de localisation (OS1) sont inclinés vers l'avant en direction du sol, les faisceaux de localisation (OS1) s'étendant de part et d'autre du bord (EK) du produit à récolter, à une distance (A1) comprise entre 3 m et 15 m en avant du mécanisme de coupe/battage (2), de préférence entre 8 m et 10 m.

4. Machine de récolte à orientation automatique selon la revendication 3, **caractérisée en ce que** le premier dispositif de localisation (OV1) est un scanneur à laser, avec des dispositifs d'émission/réception de faisceau laser, dont les faisceaux laser (OS1) sont déviés de manière périodique à l'intérieur d'une zone angulaire déterminée.

5. Machine de récolte à orientation automatique selon la revendication 3, **caractérisée en ce que** le premier dispositif de localisation (OV1) est un détecteur à ultrasons, avec des dispositifs d'émission/réception d'ultrasons.

6. Machine de récolte à orientation automatique selon une des revendications 3 à 5, **caractérisée en ce que** le premier dispositif de localisation (OV1) est monté sur le mécanisme de coupe/battage (2).

7. Machine de récolte à orientation automatique selon la revendication 6, **caractérisée en ce que** le premier dispositif de localisation (OV1) est disposé directement sur l'arête gauche ou droite du mécanisme de coupe/battage (2).

8. Machine de récolte à orientation automatique selon une des revendications 3 à 5, **caractérisée en ce que** le premier dispositif de localisation (OV1) est monté sur le véhicule (1) automoteur.

9. Machine de récolte à orientation automatique selon une des revendications précédentes 3 à 8, **caractérisée en ce que** le deuxième dispositif de localisation (OV2) palpe le bord (EK) du produit à récolter dans la zone d'entrée du mécanisme de coupe/battage (2).

10. Machine de récolte à orientation automatique selon la revendication 9, **caractérisée en ce que** le deuxième dispositif de localisation (OV2) est disposé sur l'arête gauche ou droite (SK) du mécanisme de coupe/battage (2) et palpe la distance entre l'arête (SK) du mécanisme de coupe/battage et le bord (EK) du produit à récolter.

11. Machine de récolte à orientation automatique selon une des revendications 9 ou 10, **caractérisée en ce que** le deuxième dispositif de localisation (OV2) est formé d'un détecteur à ultrasons, avec des dispositifs d'émission/réception d'ultrasons.

12. Machine de récolte à orientation automatique selon une des revendications 9 ou 10, **caractérisée en ce que** le deuxième dispositif de localisation (OV2) est formé d'un arceau palpeur, déplaçable mécaniquement par rapport au bord (EK) du produit à récolter, dont on mesure déviation.

13. Machine de récolte à orientation automatique selon une des revendications 10 ou 12, **caractérisée en ce que** le deuxième dispositif de localisation (OV2) délivre en outre un signal pour la charge du dispositif de coupe/battage.

14. Machine de récolte à orientation automatique selon une des revendications précédentes, **caractérisée en ce que** la machine de récolte comporte un dispositif de localisation (OV1) monté pivotant autour d'un axe horizontal, le dispositif de localisation (OV1), en fonction de l'angle de pivotement, palpant le bord (EK) du produit à récolter à des distances différentes (A1, A2) en avant du mécanisme de coupe/battage (2).

15. Machine de récolte à orientation automatique selon la revendication 14, **caractérisée en ce que** le dispositif de localisation (OV1), pour le palpage rapproché et le palpage éloigné du bord (EK) du produit à récolter, peut être réglé sous deux angles de pivotement.

16. Machine de récolte à orientation automatique selon la revendication 14, **caractérisée en ce que** le dispositif de localisation (OV1) peut pivoter de manière progressive, le bord (EK) du produit à récolter pouvant être palpé de manière progressive à l'intérieur d'une plage de distances (A1-A2) en avant du mécanisme de coupe/battage (2).

17. Machine de récolte à orientation automatique selon une des revendications précédentes, **caractérisée en ce que** la machine de récolte comporte un dispositif de localisation (OV1) sous la forme d'une caméra numérique, qui est disposée au-dessus du produit à récolter et est inclinée vers l'avant, en direction du sol, la zone de prise de vue de la caméra située en avant du mécanisme de coupe/battage (2) étant exploitée par traitement d'image numérique pour palper le bord (EK) du produit à récolter.

18. Machine de récolte à orientation automatique selon la revendication 17, **caractérisée en ce que** le bord (EK) du produit à récolter est déterminé en un point à l'intérieur de la zone de prise de vue de la caméra, et **en ce que** la position de ce point est utilisée comme signal de localisation.

19. Machine de récolte à orientation automatique selon la revendication 17, **caractérisée en ce que** le bord (EK) du produit à récolter est déterminé en plusieurs points à l'intérieur de la zone de prise de vue de la caméra, et **en ce que** ces points sont utilisés comme signaux de localisation.

20. Machine de récolte à orientation automatique selon une des revendications précédentes, **caractérisée en ce que** les positions du bord du produit à récolter palpées à l'aide d'au moins un dispositif de localisation (OV1, OV2) pendant le déplacement, sont en outre mémorisées en continu dans une mémoire à tores, pour produire un tracé du bord du produit à récolter et **en ce que** ledit tracé du bord du produit à récolter est exploité par le dispositif de réglage pour l'orientation automatique.

21. Machine de récolte à orientation automatique selon une des revendications précédentes, **caractérisée en ce que** le tracé palpé du bord du produit à récolter est moyenné dans une fenêtre de temps déterminée, par un calcul glissant de valeur moyenne et le tracé moyenné du bord du produit à récolter est traité par le dispositif de réglage à des fins d'orientation automatique.
